# EUROPÄISCHE PATENTSCHRIFT

(11) **EP 2 413 554 B1**
(45) Veröffentlichungstag und Bekanntmachung des Hinweises auf die Patenterteilung: **20.04.2016**
(21) Anmeldenummer: 11164538.8
(22) Anmeldetag: 03.05.2011
(51) Int. Cl.: G05B 19/406, G05B 19/414, G05B 19/042, H04L 25/45, H04Q 9/00, G05B 23/02

(54) **Vorrichtung zur Manipulation von Schnittstellensignalen**
Device for manipulating interface signals
Dispositif de manipulation de signaux d'interface

(30) Priorität: 28.07.2010 DE 102010038552
(43) Veröffentlichungstag der Anmeldung: 01.02.2012
(73) Patentinhaber: Dr. Johannes Heidenhain GmbH, 83301 Traunreut (DE)
(72) Erfinder: Kreuzer, Stephan, Dr., 83362, Surberg-Ettendorf (DE); Mayer, Elmar, Dr., 83365, Nußdorf (DE); Ollert, Udo, 84558, Kirchweidach (DE)

(56) Entgegenhaltungen:
- EP-A1- 0 171 579
- EP-B1- 0 660 209
- DE-A1- 10 018 206
- DE-A1-102006 008 539
- DE-A1-102008 027 895
- US-A1- 2007 100 478

## Beschreibung

Die Erfindung betrifft eine Vorrichtung zur Manipulation von Schnittstellensignalen nach Anspruch 1. Weiter betrifft die Erfindung ein Steuergerät mit einer Vorrichtung zur Manipulation von Schnittstellensignalen nach Anspruch 7.

In der Automatisierungstechnik werden vermehrt Messgeräte eingesetzt, die digitale Messwerte zur Verfügung stellen. Im Bereich der numerischen Steuerungen, die beispielsweise zur Steuerung von Werkzeugmaschinen eingesetzt werden, gilt das besonders für Positionsmessgeräte zur Messung von linearen oder rotatorischen Bewegungen. Positionsmessgeräte, die digitale (absolute) Messwerte generieren, werden als absolute Positionsmessgeräte bezeichnet.

Für die Übertragung der absoluten Positionswerte kommen hauptsächlich serielle Datenschnittstellen zum Einsatz, da diese mit nur wenigen Datenübertragungsleitungen auskommen und trotzdem hohe Datenübertragungsraten aufweisen. Besonders vorteilhaft sind hier die sogenannten synchronseriellen Schnittstellen, die eine uni- oder bidirektionale Datenleitung und eine Taktleitung aufweisen. Die Übertragung von Datenpaketen über die Datenleitung erfolgt synchron zu einem Taktsignal auf der Taktleitung. In der Automatisierungstechnik hat sich eine Vielzahl von digitalen Standardschnittstellen durchgesetzt, populäre Vertreter für synchron-serielle Schnittstellen sind beispielsweise die EnDat-Schnittstelle der Anmelderin, eine weitere ist unter der Bezeichnungen SSI bekannt. Daneben sind auch noch asynchrone serielle Schnittstellen wie beispielsweise Hiperface verbreitet.

Die SSI-Schnittstelle wird in der EP0171579A1 beschrieben. Es handelt sich hierbei um eine synchron-serielle Datenschnittstelle mit einer unidirektionalen Daten- und einer unidirektionalen Taktleitung. Das Auslesen von Positionswerten von einem Positionsmessgerät erfolgt hier synchron zu einem Taktsignal auf der Taktleitung.

Die EP0660209B2 beschreibt dagegen die Grundlage der EnDat-Schnittstelle der Anmelderin. Bei dieser handelt es sich ebenfalls um eine synchron-serielle Schnittstelle, die jedoch neben der unidirektionalen Taktleitung eine bidirektionale Datenleitung aufweist. Dadurch ist eine Übertragung von Daten in beide Richtungen - von der numerischen Steuerung zum Positionsmessgerät und vom Positionsmessgerät zur numerischen Steuerung - möglich. Die Datenübertragung erfolgt auch hier synchron zu einem Taktsignal auf der Taktleitung.

Mittlerweile werden über digitale Messgeräteschnittstellen neben den reinen Nutzdaten, (z.B. bei Positionsmessgeräten die Positionswerte) auch noch Zusatzdaten übertragen, einige Beispiele hierfür sind:
- Geschwindigkeit
- Beschleunigung
- Temperatur im Messgerät
- Zweiter, unabhängig erzeugter Positionswert
- Statusinformationen (Warnsignale, Fehlersignale,...)

Besonders im Hinblick auf die Betriebssicherheit von Automatisierungsanlagen ist es notwendig, die Reaktion der Anlage auf Fehlerzustände, die sich in den zwischen Steuerung und Messgerät ausgetauschten Daten wiederspiegeln, zu testen. Hierzu ein Beispiel:

Die Steuerung fordert in definierten Zeitabständen über die digitale Messgeräteschnittstelle Positionswerte von einem Positionsmessgerät an. Die Positionswerte werden in Form von Datenpaketen zur Steuerung übertragen. Zur Überprüfung, ob es sich bei dem aktuellen Positionswert auch um einen tatsächlich neu gebildeten Positionswert handelt, enthält das Datenpaket noch einen zweiten Positionswert, der im Messgerät unabhängig vom ersten Positionswert gebildet wurde und zu diesem einen definierten mathematischen Zusammenhang aufweist. Beispielsweise unterscheiden sich die beiden Positionswerte durch einen Offset, der der Steuerung bekannt ist. In der Steuerung kann nun durch Vergleich der beiden Positionswerte ermittelt werden, ob der Offset tatsächlich vorhanden ist, oder nicht. Im ersten Fall wurden die Daten korrekt gebildet und übertragen, im zweiten Fall ist entweder im Messgerät oder auf der Übertragungsstrecke ein Fehler aufgetreten.

Ob die Steuerung aber einen derartigen Fehler tatsächlich erkennt und richtig reagiert, ist in der Praxis, also bei einer real existierenden Anlage, nur sehr schwierig zu überprüfen. Theoretisch besteht natürlich die Möglichkeit, das Messgerät entsprechend zu manipulieren, bzw. die eingebauten Messgeräte durch manipulierte zu ersetzen. Spätestens dann, wenn mehrere Messgeräte, bzw. mehrere Ausfallsituationen getestet werden sollen, scheitert diese Vorgehensweise am hohen Aufwand.

Die US 2007/0100478 A1 beschreibt ein System zur Überprüfung der Reaktion einer Kontrolleinrichtung einer Ölverarbeitungsanlage auf fehlerhafte Sensordaten. Hierzu wird eine Modifizierungseinheit zwischen den Sensor und die Kontrolleinrichtung geschaltet, die geeignet ist, Sensordaten zu empfangen, die empfangenen Sensordaten zu modifizieren und die modifizierten Sensordaten wiederum an die Kontrolleinrichtung auszugeben. Nachteil dieses Systems ist es, dass es bei Automatisierungsanlagen kaum einsetzbar ist, da hier schnelle Reaktionszeiten erwartet werden und daher bereits die aus dem Ablauf der Modifikation resultierende zeitliche Verzögerung als Fehler erkannt wird.

Es ist daher Aufgabe der Erfindung, eine Vorrichtung anzugeben, die eine einfache Diagnose ermöglicht.

Diese Aufgabe wird gelöst durch eine Vorrichtung nach Anspruch 1. Vorteilhafte Details der Vorrichtung ergeben sich aus den von Anspruch 1 abhängigen Ansprüchen.

Es wird nun eine Vorrichtung zur Manipulation von Schnittstellensignalen vorgeschlagen, mit
- einer Slave-Schnittstelle, die an eine Master-Schnittstelle eines Steuergeräts anschließbar ist,
- einer Master-Schnittstelle, die an eine Slave-Schnittstelle eines Messgeräts anschließbar ist,
- einer Schaltungsanordnung, der je Schnittstelle wenigstens ein Dateneingangsignal zugeführt ist und die je Dateneingangssignal zur jeweils anderen Schnittstelle ein korrespondierendes Datenausgangssignal ausgibt, wobei
die Schaltungsanordnung wenigstens eine Manipulationseinheit umfasst, der ein Dateneingangssignal und ein Ersatzdatensignal zugeführt ist und die ein korrespondierendes Datenausgangssignal ausgibt, sowie eine Protokolleinheit, der wenigstens ein protokollrelevantes Schnittstellensignal zugeführt ist und die anhand von Manipulationsregeln und mit dem wenigstens einen protokollrelevanten Schnittstellensignal empfangenen Informationen auswählt, wann die wenigstens eine Manipulationseinheit als Datenausgangssignal das korrespondierende Dateneingangssignal oder das Ersatzdatensignal ausgibt.

Weiter wird diese Aufgabe gelöst durch ein Steuergerät nach Anspruch 7.

Weitere Vorteile sowie Einzelheiten der vorliegenden Erfindung ergeben sich aus der nachfolgenden Beschreibung anhand der Figuren. Dabei zeigt
- Figur 1: eine erfindungsgemäße Vorrichtung, die zwischen einem Steuergerät und einem Positionsmessgerät angeordnet ist,
- Figur 2: ein Blockschaltbild einer Schaltungsanordnung, die in einer erfindungsgemäßen Vorrichtung enthalten ist,
- Figur 3: eine vereinfachte Datenübertragungssequenz zur Veranschaulichung der Funktionsweise einer erfindungsgemäßen Vorrichtung,
- Figur 4: ein weiteres Ausführungsbeispiel, bei dem eine erfindungsgemäße Vorrichtung in ein Steuergerät integriert ist.

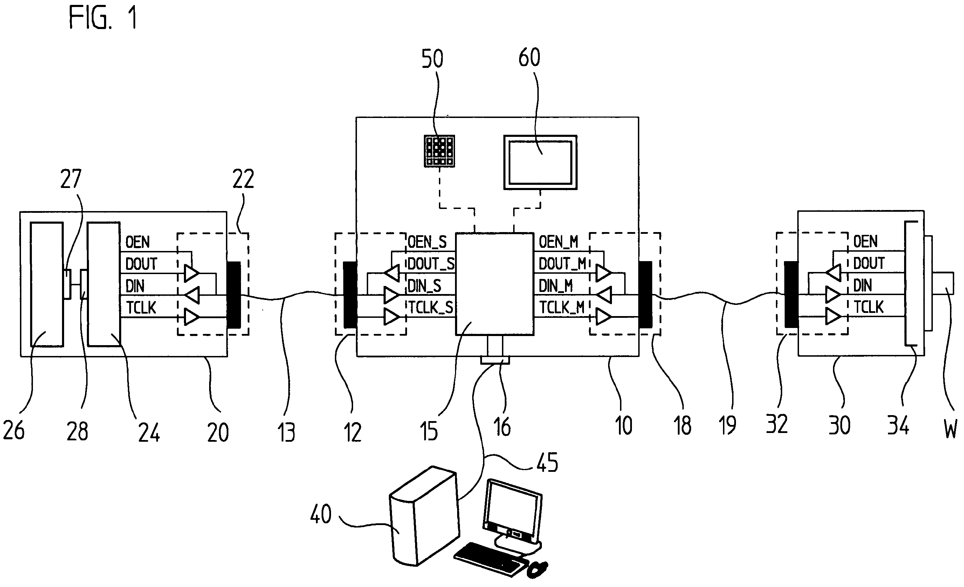

Figur 1 zeigt eine Vorrichtung 10 zur Manipulation von Schnittstellensignalen, die zwischen einem Steuergerät 20 und einem Messgerät 30 angeordnet ist. Das Steuergerät 20 kann ein beliebiges Gerät der Automatisierungstechnik oder Antriebstechnik sein, das wenigstens eine serielle Schnittstelle aufweist, die geeignet ist, mit einem an die Schnittstelle angeschlossenen Messgerät zu kommunizieren. Beispiele hierfür sind Positionsanzeigen, Numerische Steuerungen (NC) und Speicherprogrammierbare Steuerungen (SPS). In den folgenden Ausführungsbeispielen kommt als Steuergerät 20 stellvertretend eine Numerische Steuerung 20 zum Einsatz. Bei dem Messgerät handelt es sich insbesondere um ein Positionsmessgerät 30, beispielsweise zur Messung des Drehwinkels und/oder der Anzahl zurückgelegter Umdrehungen einer Welle W.

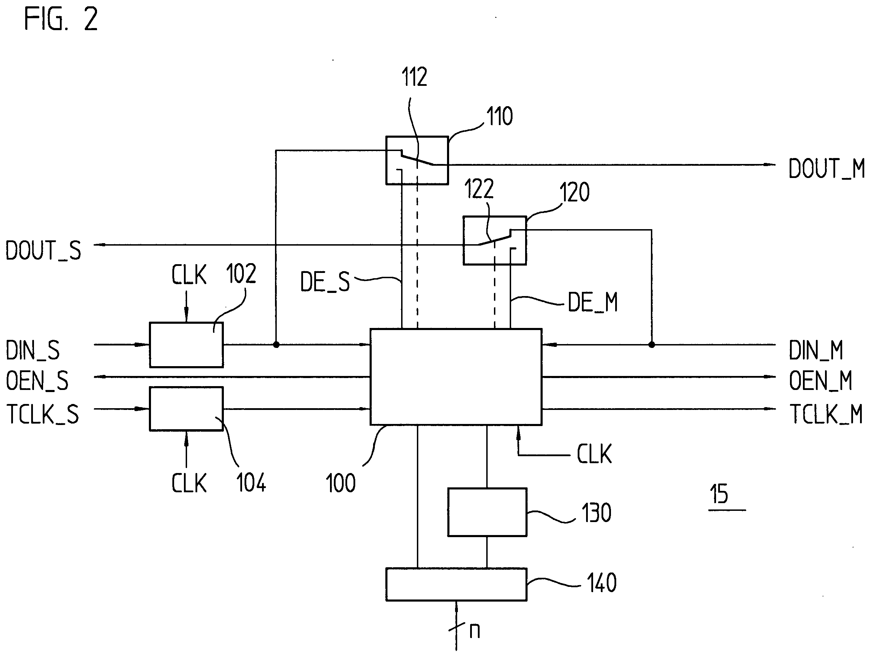

Die Vorrichtung 10 umfasst für den Datenaustausch mit der Numerischen Steuerung 20 eine Slave-Schnittstelle 12, die mittels eines ersten Schnittstellenkabels 13 mit einer Master-Schnittstelle 22 eines Schnittstellencontrollers 24 der Numerischen Steuerung 20 verbunden ist. Weiter umfasst die Vorrichtung eine Master-Schnittstelle 18, die mittels eines zweiten Schnittstellenkabels 19 mit einer Slave-Schnittstelle 32 des Positionsmessgerätes 30 verbunden ist. Zentrale Einheit der Vorrichtung 10 ist eine Schaltungsanordnung 15, die Schnittstellensignale verarbeitet. Der Aufbau der Schaltungsanordnung 15 wird unten in Verbindung mit Figur 2 näher beschrieben.

Die Schnittstellenkabel und die Schnittstellen sind in üblicher Weise mit geeigneten Steckverbindern ausgestattet, so dass eine erfindungsgemäße Vorrichtung auch bei fertig installierten Automatisierungsanlagen, bzw. Werkzeugmaschinen, einfach zwischen die Numerische Steuerung 20 und das Positionsmessgerät 30 eingeschaltet werden kann, indem beispielsweise die Verbindung zwischen Master-Schnittstelle 22 der Numerischen Steuerung 20 und Slave-Schnittstelle 32 des Positionsmessgeräts 30 getrennt und je eine Verbindung zwischen Master-Schnittstelle 22 der Numerischen Steuerung 20 mit der Slave-Schnittstelle 12 der Vorrichtung 10, sowie der Slave-Schnittstelle 32 des Positionsmessgeräts 30 und der Master-Schnittstelle 18 der Vorrichtung 10 hergestellt wird. Der Vollständigkeit halber sei auch erwähnt, dass über die Schnittstellenkabel üblicherweise auch die Stromversorgung des Positionsmessgeräts 30 erfolgt und eine entsprechende Verbindung in der Vorrichtung 10 hergestellt wird (nicht dargestellt). Diese Stromversorgung kann auch für den Betrieb der Vorrichtung 10 herangezogen werden.

Die Schnittstellen können weiter in bekannter Weise Treiber- und Empfängerbausteine umfassen, beispielsweise um Schnittstellensignale, die als einfache, massebezogene digitale Signale in der Numerischen Steuerung 20, der Vorrichtung 10 und dem Positionsmessgerät 30 erzeugt und verarbeitet werden, in Signale umzuwandeln, die für die störsichere Übertragung über größere Entfernungen geeignet sind. Besonders verbreitet sind Treiber- und Empfängerbausteine, die eine differentielle Übertragung digitaler Signale nach dem bekannten RS-485-Standard erlauben. Ebenfalls bekannt und vorteilhaft ist die Umwandlung der digitalen Schnittstellensignale in optische Signale, die über Lichtwellenleiter übertragen werden.

Welche Daten vom Positionsmessgerät 30 angefordert, bzw. zum Positionsmessgerät 30 gesendet werden, bestimmt in der Numerischen Steuerung 20 eine Steuereinheit 26, die über eine Applikationsschnittstelle 27, 28 mit dem Schnittstellencontroller 24 verbunden ist. Der Schnittstellencontroller 24 dient hierbei quasi als Übersetzungseinheit, die Kommunikationsbefehle der allgemeinen Applikationsschnittstelle 27, 28 in Schnittstellensignale der speziellen Master-Schnittstelle 22 der Numerischen Steuerung 20 umwandelt. Die Bereitstellung angeforderter Daten, bzw. die Verarbeitung empfangener Daten erfolgt im Positionsmessgerät 30 in einer Messeinheit 34.

Bei der Steuereinheit 26 handelt es sich um eine programmgesteuerte Einheit, insbesondere basierend auf einem Mikrocontroller oder Mikroprozessor. Beispiele für Funktionen der Steuereinheit 26 sind das Auslesen und Anzeigen von Positionswerten, sowie das Kontrollieren komplexer Regelkreise, indem sie von Messgeräten, z.B. Positionsmessgeräten 30, Istwerte anfordert und aus diesen Sollwerte zur Steuerung von Antrieben ermittelt.

Die Vorrichtung 10 ist im Grundzustand mit Vorteil transparent geschaltet, d.h. Eingangssignale, die bei einer der Schnittstellen 12, 18 der Vorrichtung 10 eintreffen, werden als korrespondierende Ausgangssignale bei der jeweils anderen Schnittstelle 12, 18 ausgegeben. Dadurch ist ein ungestörter Betrieb der von der Numerischen Steuerung 20 gesteuerten Anlage gewährleistet, auch wenn die Vorrichtung 10 vorhanden ist.

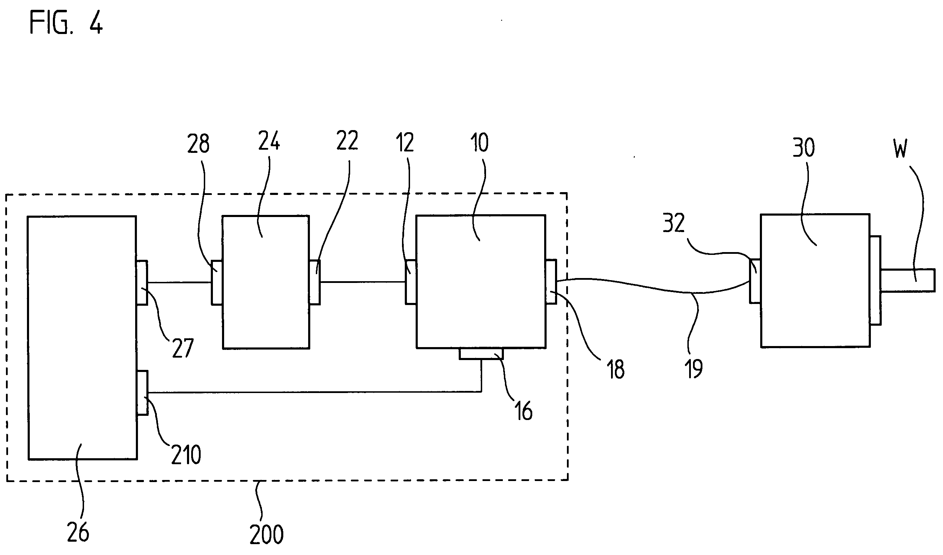

An der Vorrichtung 10 ist weiter eine Bedienschnittstelle 16 vorgesehen, an die mittels eines weiteren Schnittstellenkabels 45 eine Bedieneinheit 40 anschließbar ist. Die Bedienschnittstelle 16 kann sowohl zur Programmierung, als auch zur Steuerung der Funktionen der Schaltungsanordnung 15 dienen. Sie kann zwar vom selben Typ wie die Slave-Schnittstelle 12, bzw. die Master-Schnittstelle 18 sein, ist aber nicht darauf festgelegt. Einige Beispiele für die Ausführung der Bedienschnittstelle 16 wären 12C-, SPI-, oder JTAG-Schnittstelle. In der Praxis ist es besonders vorteilhaft, wenn als Bedieneinheit 40 ein handelsüblicher Personal Computer, insbesondere ein Laptop oder Notebook eingesetzt wird. Derartige Geräte verfügen standardmäßig über USB- oder Ethernet-Schnittstellen, die ebenfalls als Bedienschnittstelle 16 geeignet sind. Desweiteren sind auch drahtlose Schnittstellen verwendbar, etwa optisch nach dem IrDA-Standard oder via Funkstrecke nach dem Bluetooth- oder ZigBee-Standard. Anstelle einer separaten Bedieneinheit 40 besteht auch die Möglichkeit, die Vorrichtung 10 über eine zusätzliche Schnittstelle (nicht dargestellt) des Steuergeräts 20 zu bedienen. Dadurch werden ähnliche Vorteile wie bei dem weiter unten anhand von Figur 4 beschriebenen Ausführungsbeispiel erzielt.

Optional können in der Vorrichtung 10 noch Bedienelemente 50, beispielsweise als Tastenfeld ausgeführt, und eine Anzeigeeinheit 60 in Form eines mehrzeiligen Displays angeordnet sein, über die die Schaltungsanordnung 15 programmierbar und/oder bedienbar ist. Auf diese Weise können komplexe Bedienfunktionen, z.B. Aktivieren von Testfunktionen, Auswahl des Messgerätemodells, Version der Schnittstelle etc., direkt an der Vorrichtung 10 ausgeführt werden, so dass die Vorrichtung als autarkes Gerät betreibbar ist, das beispielsweise Servicepersonal zur Verfügung gestellt werden kann, um eine installierte Anlage bei einem Kunden zu überprüfen.

Im vorliegenden Beispiel handelt es sich bei der Master-Schnittstelle 22 der Numerischen Steuerung 20 um eine EnDat-Schnittstelle. Demzufolge erfolgt die physikalische Datenübertragung, wie in der Eingangs erwähnten EP0660209B2 beschrieben, gemäß dem RS-485-Standard in Form von Differenzsignalen über zwei Leitungspaare, wobei das erste Leitungspaar zur bidirektionalen Übertragung von Daten und das zweite Leitungspaar zur unidirektionalen Übertragung eines Taktsignals dient. Die Übertragung der Daten erfolgt synchron zum Taktsignal. Für diese Schnittstelle müssen intern drei Schnittstellensignale verwaltet werden, ein Taktsignal TCLK, ein Dateneingangssignal DIN und ein Datenausgangssignal DOUT. Die Einstellung der Datenrichtung, also ob das Datenausgangssignal aktiv ausgegeben wird, erfolgt über ein Freigabesignal OEN, das entsprechend dem Datenübertragungsprotokoll geschaltet wird.

Im Folgenden werden Slave-Schnittstellensignale, die zur Kommunikation der Slave-Schnittstelle 12 der Vorrichtung 10 mit der Master-Schnittstelle 22 der Numerischen Steuerung 20 dienen, als Slave-Dateneingangssignal DIN_S, Slave-Datenausgangsignal DOUT_S, Slave-Taktsignal TCLK_S und Slave-Freigabesignal OEN_S bezeichnet. Analog dazu erfolgt die Kommunikation der Master-Schnittstelle 18 der Vorrichtung 10 mit der Slave-Schnittstelle 32 des Positionsmessgeräts 30 über Master-Schnittstellensignale, insbesondere über ein Master-Dateneingangssignal DIN_M, ein Master-Datenausgangsignal DOUT_M, ein Master-Taktsignal TCLK_M und ein Master-Freigabesignal OEN_M. Korrespondierende Schnittstellensignale sind jeweils Slave-Dateneingangssignal DIN_S und Master-Datenausgangssignal DOUT_M, Slave-Taktsignal TCLK_S und Master-Taktsignal TCLK_M, sowie Master-Dateneingangssignal DIN_M und Slave-Datenausgangssignal DOUT_S.

Figur 2 zeigt ein Blockschaltbild einer Schaltungsanordnung 15. Einer zentralen Protokolleinheit 100 sind protokollrelevante Schnittstellensignale, also Signale, die zur Erkennung und Verarbeitung des Datenübertragungsprotokolls geeignet sind, zugeführt. Im vorliegenden Beispiel handelt es sich dabei um das Slave-Dateneingangssignal DIN_S, das Slave-Taktsignal TCLK_S und, wenn auch Antwortdaten des Positionsmessgeräts 30 verarbeitet werden sollen, das Master-Dateneingangssignal DIN_M. In Abhängigkeit von der aktuellen Datenrichtung, die sich aus dem Protokollablauf ergibt, erzeugt die Protokolleinheit 100 auch das Slave-Freigabesignal OEN_S und das Master-Freigabesignal OEN_M. Darüber hinaus gibt die Protokolleinheit 100 auch das Master-Taktsignal TCLK_M über die Master-Schnittstelle 18 zum Positionsmessgerät 30 aus.

Das Slave-Dateneingangssignal DIN_S ist neben der Protokolleinheit 100 auch noch einer ersten Manipulationseinheit 110 zugeführt, die das Master-Datenausgangssignal DOUT_M ausgibt. Über einen von der Protokolleinheit 100 gesteuerten Umschalter 112 ist auswählbar, ob die erste Manipulationseinheit 110 als Master-Datenausgangssignal DOUT_M das Slave-Dateneingangssignal DIN_S oder ein von der Protokolleinheit 100 generiertes Slave-Ersatzdatensignal DE_S ausgibt. In anderen Worten bestimmt die Stellung des Umschalters 120 in der ersten Manipulationseinheit 110, ob die ursprünglich von der Numerischen Steuerung 20 gesendeten Daten, bzw. Befehle zum Positionsmessgerät 30 gelangen, oder von der Protokolleinheit 100 generierte Ersatzdaten. Auf diese Weise können einzelne Datenbits oder auch ganze Bitsequenzen manipuliert, bzw. ausgetauscht werden.

In der entgegengesetzten Datenrichtung ist das Master-Dateneingangssignal DIN_M einer zweiten Manipulationseinheit 120 zugeführt, die das Slave-Datenausgangssignal DOUT_S ausgibt. In der zweiten Manipulationseinheit 120 bestimmt ein weiterer Umschalter 122, ob eben dieses Master-Dateneingangssignal DIN_M oder ein alternatives, in der Protokolleinheit 100 erzeugtes Master-Ersatzdatensignal DE_M als Slave-Datenausgangssignal DOUT_S ausgegeben wird. Auch hier ist nun eine bitweise Manipulation der Daten, die vom Positionsmessgerät 30 zur Numerischen Steuerung 20 gesendet werden, möglich.

Die Protokolleinheit 100 ist mit Vorteil als zustandsgesteuerter Automat realisiert, der Informationen, insbesondere Befehle, die mit den protokollrelevanten Schnittstellensignalen von der Numerischen Steuerung 20 eintreffen, erkennt und in Abhängigkeit von diesen Informationen und nach vorgegebenen Manipulationsregeln eine Manipulation der Daten vornimmt. Sie arbeitet synchron zu einem Arbeitstaktsignal CLK, das entweder in der Schaltungsanordnung 15 erzeugt, oder dieser von außen zugeführt wird. Da die Schnittstellensignale, die aus Richtung der Numerischen Steuerung 20 bei der Schaltungsanordnung 15 ankommen, in diesem Beispiel konkret das Slave-Taktsignal TCLK_S und das Slave-Dateneingangssignal DIN_S, asynchron zum Arbeitstaktsignal CLK sind, ist es von Vorteil, diese bereits am Eingang der Schaltungsanordnung 15 mittels Synchronisationseinheiten 102, 104 mit dem Arbeitstaktsignal CLK zu synchronisieren. Dabei werden diese Signale lediglich zeitlich verzögert, bleiben ansonsten aber weitgehend unverändert. Da dadurch auch die Antwortdaten des Positionsmessgeräts 30 verzögert bei der Numerischen Steuerung 20 eintreffen, wirkt sich eine derartige Verzögerung auf die Numerische Steuerung 20 wie die Verwendung längerer Schnittstellenkabel 13, 19 aus. Um die Schnittstellensignale verarbeiten zu können, muss das Arbeitstaktsignal CLK die gleiche oder eine höhere Frequenz als die maximal zu erwartende Frequenz des Slave-Taktsignals TCLK_S aufweisen. Grundsätzlich gilt, je höher die Frequenz des Arbeitstaktsignals CLK ist, desto geringer ist die zeitliche Verzögerung der Schnittstellensignale. Bei einer maximalen Frequenz des Slave-Taktsignals TCLK_S von 10 MHz hat sich in der Praxis eine Frequenz des Arbeitstaktsignals CLK im Bereich von 40 bis 100 MHz als günstig erwiesen.

Die Manipulationsregeln können beispielsweise fest im zustandsgesteuerten Automaten abgelegt sein. Besonders vorteilhaft ist es jedoch, einen Manipulationsspeicher 130 vorzusehen, dessen Inhalt über eine Kommunikationseinheit 140 programmierbar ist, die mit der Bedieneinheit 40 über die Bedienschnittstelle 16 über eine Anzahl von n Steuersignalen kommuniziert. Im Manipulationsspeicher 130 können sowohl Manipulationsregeln, als auch Ersatzdaten für die Erzeugung der Ersatzdatensignale DE_S, DE_M gespeichert werden. Auf diese Weise kann die Vorrichtung 10 flexibel an geänderte Anforderungen angepasst werden.

Die Bedienschnittstelle 16 kann darüber hinaus dazu genutzt werden, Modifikationen am Datenaustausch zwischen der Numerischen Steuerung 20 und dem Positionsmessgerät 30 erst freizugeben, bzw. Art und Umfang der Manipulationen festzulegen. Das kann beispielsweise über ein Computerprogramm erfolgen, das in der Bedieneinheit 40 ablauffähig ist und eine menügeführte Auswahl verschiedener Optionen anbietet.

Als Schaltungsanordnung 15 kommt mit Vorteil ein programmierbarer Baustein zum Einsatz, beispielsweise ein FPGA (Field Programmable Gate Array). Derartige Bausteine können jederzeit neu programmiert werden und sind daher bestens geeignet, auf Änderungen und/oder Erweiterungen der Manipulationsmöglichkeiten einer erfindungsgemäßen Vorrichtung 10 zu reagieren. Ebenfalls besonders gut geeignet als Schaltungsanordnung 15 sind Mikrocontroller, da auch sie einfach umzuprogrammieren und an geänderte Bedingungen anzupassen sind. Die Programmierung der Schaltungsanordnung 15 kann beispielsweise ebenfalls über die Bedienschnittstelle 16 erfolgen.

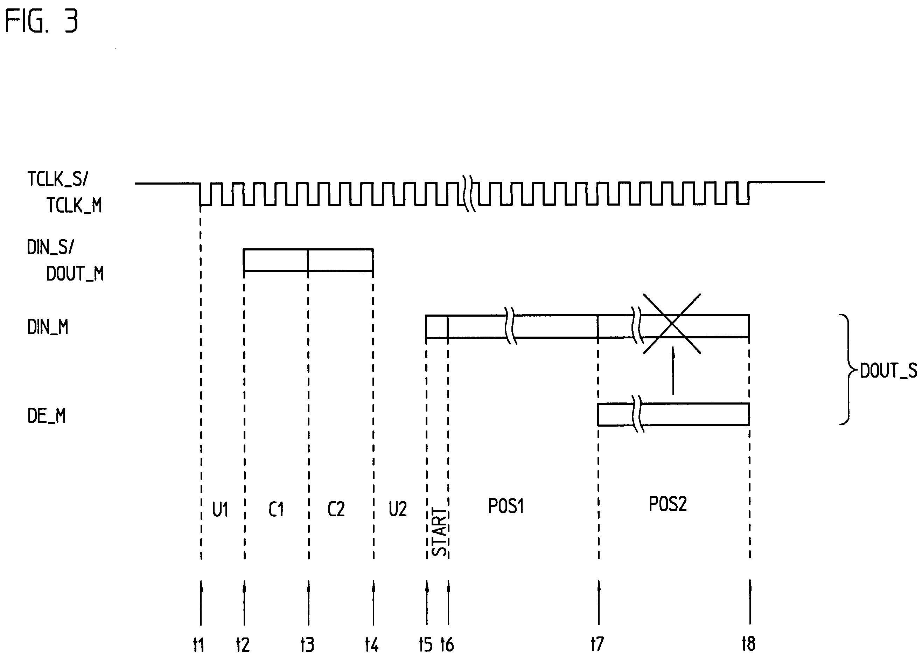

Figur 3 zeigt eine vereinfachte Datenübertragungssequenz zur Veranschaulichung der Funktionsweise einer erfindungsgemäßen Vorrichtung 10. Insbesondere wurde darauf verzichtet, geringe zeitliche Verzögerungen, hervorgerufen durch die Verarbeitung, bzw. Synchronisierung der Schnittstellensignale in der Schaltungsanordnung 100, darzustellen. Gezeigt ist die Übertragung eines Positionsanforderungsbefehls von der Numerischen Steuerung 20 zum Positionsmessgerät 30, worauf das Positionsmessgerät 30 aktuelle Positionsdaten zur Numerischen Steuerung 20 sendet. Zur Erhöhung der Übertragungssicherheit ist zum einen der Positionsanforderungsbefehl redundant ausgelegt, insbesondere besteht er aus einem ersten Befehlsblock C1 und einem zweiten Befehlsblock C2, die beispielsweise aus je 3 Bits bestehen, wobei der zweite Befehlsblock C2 lediglich den ersten Befehlsblock C1 identisch oder invertiert wiederholt. Zum anderen sendet das Positionsmessgerät 30 als Antwort auf den Positionsanforderungsbefehl, wie oben bereits erwähnt, zwei Positionswerte POS1 und POS2, die den mathematischen Zusammenhang POS2=POS1+OFFSET zueinander aufweisen. Die Positionswerte POS1 und POS2 werden im Positionsmessgerät 30 unabhängig voneinander generiert, wodurch die Numerische Steuerung 20 durch Vergleich der Positionswerte POS1, POS2 mit dem bekannten mathematischen Zusammenhang feststellen kann, ob die Generierung und Übertragung der Positionswerte POS1, POS2 fehlerfrei war. Wird ein Fehler festgestellt, muss die Numerische Steuerung 20 definiert reagieren, beispielsweise durch Ausgeben einer Alarmmeldung oder durch Stillsetzen der Anlage ("Sicherer Halt"), in der das Positionsmessgerät 30 betrieben wird.

Als zusätzliche Maßnahme zur Erhöhung der Übertragungssicherheit können die Positionswerte POS1, POS2 jeweils durch einen CRC-Code abgeschlossen sein.

Als Manipulationsregel für den oben beschriebenen Positionsanforderungsbefehl ist in der Vorrichtung 10 hinterlegt, dass an Stelle des tatsächlichen, vom Positionsmessgerät 30 gesendeten, zweiten Positionswerts POS2 ein alternativer, geänderter zweiter Positionswert POS2 zur Numerischen Steuerung 20 weitergeleitet werden soll. Die Manipulationsregel bestimmt somit, zu welchem Zeitpunkt die zweite Manipulationseinheit 120 umgeschaltet werden muss, um als Slave-Datenausgangssignal DOUT_S anstatt des Master-Dateneingangssignals DIN_M das Master-Ersatzdatensignal DE_M auszugeben. Auf welche Weise der zweite Positionswert POS2 geändert werden soll, kann ebenfalls in der Manipulationsregel festgelegt sein. Die Protokolleinheit stellt entsprechend dieser Vorgaben ein Master-Ersatzdatensignal DE_M bereit.

Die Manipulationsregel kann noch beliebige weitere Anweisungen enthalten, etwa, ob die Manipulation nur beim ersten Auftreten eines Befehls ausgeführt wird, oder mehrere Male, oder sogar jedes Mal, wenn dieser Befehl erkannt wird. Weiter kann festgelegt sein, ob die Manipulation immer gleich, oder jedes Mal anders, entsprechend einer Bildungsvorschrift für das Ersatzdatensignal DE_M, DE_S, erfolgt.

Es sei an dieser Stelle ausdrücklich darauf hingewiesen, dass Manipulationsregeln nicht zwingend Befehlen zugeordnet sein müssen, die im Rahmen des Datenübertragungsprotokolls von der Numerischen Steuerung 20 zum Positionsmessgerät 30 geschickt werden. Es kann vielmehr jeder beliebigen Information, die von der Numerischen Steuerung 20, oder auch vom Positionsmessgerät 30 bei der Vorrichtung 10, bzw. der Schaltungsanordnung 100 eintrifft, eine Manipulationsregel zugeordnet sein. Im einfachsten Fall kann bereits das Einsetzen des Taktsignals, also der Beginn einer Datenübertragung, als Information gewertet werden, der eine Manipulationsregel zugeordnet ist.

Die erste Zeile der in Figur 3 dargestellten Datenübertragungssequenz zeigt das von der Numerischen Steuerung 30 bei der Schaltungsanordnung 15 eintreffende Slave-Taktsignal TCLK_S, bzw. das (unter Vernachlässigung einer Verzögerung) von der Schaltungsanordnung 15 an das Positionsmessgerät 30 weitergeleitete Master-Taktsignal TCLK_M.

Die zweite Zeile zeigt das Slave-Dateneingangssignal DIN_S, das die Befehlsblöcke C1 und C2 umfasst, und, in diesem Beispiel unverändert, über die erste Manipulationseinheit 110 als Master-Datenausgangssignal DOUT_M in Richtung des Positionsmessgeräts 30 weitergeleitet wird.

In der dritten Zeile ist das Master-Dateneingangssignal DIN_M dargestellt, das die Antwortdaten des Positionsmessgeräts 30 enthält, insbesondere die Positionswerte POS1 und POS2, ggf. abgeschlossen mit einem CRC-Code (nicht dargestellt).

Die vierte Zeile zeigt schließlich ein Master-Ersatzdatensignal DE_M, das von der Protokolleinheit 100 erzeugt wird und in diesem Beispiel zum Ersatz des vom Positionsmessgerät 30 gesendeten zweiten Positionswerts POS2 dient. Bei der Erzeugung des Master-Ersatzdatensignals DE_M ist natürlich zu beachten, ob ein CRC-Code erforderlich ist oder nicht.

Das jeweils von der zweiten Manipulationseinheit 120 ausgewählte Datensignal (entweder das Master-Dateneingangssignal DIN_M oder das Master-Ersatzdatensignal DE_M) wird als Slave-Datenausgangssignal DOUT_S zur Numerischen Steuerung 20 weitergeleitet.

Der zeitliche Ablauf gestaltet sich wie folgt:

Nach dem Aktivieren des Slave-Taktsignals TCLK_S findet zuerst eine Umschaltung der Datenrichtung statt. Unter der Annahme, dass im Ruhezustand das Slave-Freigabesignal OEN_S aktiv und das Master-Freigabesignal OEN_M passiv geschaltet ist, schaltet die Protokolleinheit 100 in einem ersten Umschaltzeitraum U1 zwischen den Zeitpunkten t1 und t2 zuerst das Slave-Freigabesignal OEN_S passiv und dann das Master-Freigabesignal OEN_M aktiv. Die Umschaltung erfolgt zeitlich gestaffelt, um Datenkollisionen zu vermeiden.

Ab dem Zeitpunkt t2 folgt die Übertragung des ersten Befehlsblocks C1, gefolgt, ab dem Zeitpunkt t3, vom zweiten Befehlsblock C2.

Die Übertragung des zweiten Befehlsblocks C2 ist zum Zeitpunkt t4 beendet, die Protokolleinheit 100 kann nun durch Vergleich der Befehlsblöcke C1, C2 feststellen, ob die Übertragung des Befehls fehlerfrei war.

Spätestens zum Zeitpunkt t4 hat die Protokolleinheit 100 ausreichend Informationen, um feststellen zu können, ob eine Manipulation von Schnittstellensignalen vorgenommen werden soll, d.h. ob für diesen Befehl, wie in diesem Beispiel, eine Manipulationsregel vorliegt. Die Manipulationsregel ist entweder in der Protokolleinheit 100 definiert, oder im Manipulationsspeicher 130 abgespeichert. Ebenso ist es möglich, dass diese Information der Protokolleinheit 100 von der Bedieneinheit 40 über Bedienschnittstelle 16 und Kommunikationseinheit 140 mitgeteilt wird.

Auf die Übertragung des Befehls folgt ab dem Zeitpunkt t4 bis zum Zeitpunkt t5 ein zweiter Umschaltzeitraum U2 in dem die Datenrichtung umgeschaltet wird, insbesondere schaltet die Protokolleinheit das Master-Freigabesignal OEN_M passiv und das Slave-Freigabesignal OEN_S aktiv.

Ab dem Zeitpunkt t5 beginnt die Übertragung der Antwortdaten vom Positionsmessgerät 30 zur Numerischen Steuerung 20, wobei zuerst eine Startsequenz START gesendet wird, die beispielsweise aus einem Startbit, gefolgt von diversen Statusbits, die Rückschlüsse auf den Betriebszustand des Positionsmessgeräts 30 erlauben, besteht.

Auf die Startsequenz START folgend wird ab dem Zeitpunkt t6 das erste Positionswort POS1 übertragen.

Entsprechend der Manipulationsregel für den vorliegenden Befehl schaltet die Protokolleinheit 100 zum Zeitpunkt t7 das Schaltelement 122 in der zweiten Manipulationseinheit 120 um, so dass ab diesem Zeitpunkt das Master-Ersatzdatensignal DE_M, das von der Protokolleinheit 100 in Abhängigkeit von der Manipulationsregel bereitgestellt wird, anstelle des Master-Dateneingangssignals DIN_M als Slave-Datenausgangssignal DOUT_S zur Numerischen Steuerung 20 ausgegeben wird.

Zum Zeitpunkt t8 ist die Datenübertragung beendet und die Protokolleinheit 100 geht in den Ausgangszustand zurück.

Wie das in Verbindung mit Figur 3 beschriebene Beispiel für eine Manipulation des Datenverkehrs zwischen der Masterschnittstelle 22 einer Numerischen Steuerung 20 und der Slave-Schnittstelle eines Positionsmessgeräts 30 zeigt, bietet eine erfindungsgemäße Vorrichtung 10, bzw. eine Schaltungsanordnung 15 vielfältige Möglichkeiten, die Reaktion der Numerischen Steuerung 20 auf vermeintlich fehlerhafte, vom Positionsmessgerät 30 gesendete Daten zu prüfen. Besonders vorteilhaft ist es, dass hierfür weder die Numerische Steuerung 20, noch das Positionsmessgerät 30 verändert werden müssen.

Einige weitere Beispiele für Manipulationen des Datenverkehrs sind:
- Wird anstatt eines zweiten Positionswerts POS2 als Zusatzinformation ein Temperaturwert, der die Temperatur im Positionsmessgerät angibt, übertragen, kann beispielsweise durch Austausch des tatsächlich gemessenen Temperaturwertes mit einem alternativen Temperaturwert eine Überhitzung des Positionsmessgeräts 30 vorgegeben und die Reaktion der Numerischen Steuerung 20 darauf geprüft werden.
- Ist die Zusatzinformation ein von Positionsänderungen abhängiger Wert, beispielsweise ein Geschwindigkeitswert, so kann durch dessen Manipulation geprüft werden, ob die Numerische Steuerung 20 eine Abweichung von einem Geschwindigkeitswert, der mit Hilfe von zwei aufeinanderfolgenden Positionswerten und der bekannten Zeit zwischen zwei Positionsabfragen in der Numerischen Steuerung 20 errechnet wird und dem im Positionsmessgerät 30 ermittelten Geschwindigkeitswert erkennt und entsprechend darauf reagiert.
- Durch Ändern einzelner Bits, beispielsweise im zweiten Befehlsblock C2, kann eine Störung der Datenübertragung zwischen Numerischer Steuerung 20 und Positionsmessgerät 30 simuliert werden.
- Werden Konfigurationsdaten von der Numerischen Steuerung 20 zum Positionsmessgerät 30 gesendet, kann durch deren Manipulation eine Fehlkonfiguration des Positionsmessgeräts 30 generiert werden.
- Ebenso können Daten, die in Speichereinheiten im Positionsmessgerät abgelegt sind (z.B. das sog. Elektronische Typenschild), wenn sie von der Numerischen Steuerung 20 angefordert werden, durch alternative Daten ersetzt werden und so beispielsweise ein anderer Messgerätetyp oder eine andere Messgeräteversion vorgetäuscht werden.

Figur 4 zeigt ein weiteres Ausführungsbeispiel, bei dem eine erfindungsgemäße Vorrichtung 10 in ein Steuergerät, z.B. eine Numerische Steuerung 200 integriert ist. Die Bezugszeichen von Komponenten, die bereits in Verbindung mit dem Ausführungsbeispiel in Figur 1 beschrieben wurden, wurden beibehalten.

Die Master-Schnittstelle 22, die der Schnittstellencontroller 24 der Numerischen Steuerung 200 bereitstellt, ist nun bereits im Gehäuse der Numerischen Steuerung 200 mit der Slave-Schnittstelle 12 der Vorrichtung 10 verbunden, im einfachsten Fall erfolgt die Verbindung korrespondierender Schnittstellensignale direkt, also ohne Steckverbinder und/oder Treiberbausteine. Die Master-Schnittstelle 18 der Vorrichtung 10 wird nun zur Master-Schnittstelle der Numerischen Steuerung 200, an die ein Messgerät 30, insbesondere ein Positionsmessgerät 30 angeschlossen werden kann.

Zur Steuerung und ggf. Programmierung der Vorrichtung 10 ist die Bedienschnittstelle 16 jetzt mit einer zweiten Applikationsschnittstelle 210 der Steuereinheit 26 verbunden. Als zweite Applikationsschnittstelle 210 und Bedienschnittstelle 16 kommen vorzugsweise drahtgebundene Schnittstellen zum Einsatz. Besonders vorteilhaft ist es, wenn die Schnittstellenverbindung zwischen der zweiten Applikationsschnittstelle 210 und der Bedienschnittstelle 16 identisch zur Schnittstellenverbindung der Applikationsschnittstelle 27, 28 zwischen Steuereinheit 26 und Schnittstellencontroller 24 ist, da die Steuereinheit 26 üblicherweise bereits mehrere Applikationsschnittstellen bereitstellt und so für die Vorrichtung 10 eine Standardschnittstelle verwendet werden kann.

Der wesentliche Unterschied im Vergleich zum ersten Ausführungsbeispiel ist, dass die Vorrichtung 10 jetzt immer verfügbar ist. Somit ist es beispielsweise für den Betreiber einer Werkzeugmaschine zu jeder Zeit möglich, ein Selbsttestprogramm ablaufen zu lassen, das sicherheitsrelevante Funktionen überprüft, um festzustellen, ob die Anlage noch der geforderten Sicherheitsstufe genügt. Derartige Selbsttestprogramme können auch automatisiert gestartet werden, etwa in definierten Zeitintervallen oder zu Beginn eines neuen Bearbeitungsprogramms. Entsprechende Selbsttestprogramme können dem Betreiber einer von der Numerischen Steuerung 20 gesteuerten Anlage vom Hersteller zur Verfügung gestellt werden.

Mit Vorteil ist die Vorrichtung 10 als Erweiterungsmodul ausgeführt, mit dem eine Numerische Steuerung 200 auch nachträglich ausgestattet werden kann.

Weiter besteht die Möglichkeit, den Schnittstellencontroller 24 und die Schaltungsanordnung 15 in einem einzigen Baustein, beispielsweise einem FPGA, ASIC oder Mikrocontroller zu realisieren.

## Patentansprüche

1. Vorrichtung zur Manipulation von Schnittstellensignalen, aufweisend
• eine Slave-Schnittstelle (12), die an eine Master-Schnittstelle (22) eines Steuergeräts (20) anschließbar ist,
• eine Master-Schnittstelle (18), die an eine Slave-Schnittstelle (32) eines Messgeräts (30) anschließbar ist,
• eine Schaltungsanordnung (15), der je Schnittstelle (12, 18) wenigstens ein Dateneingangsignal (DIN_S, DIN_M) zugeführt ist und die je Dateneingangssignal (DIN_S, DIN_M) zur jeweils anderen Schnittstelle (12, 18) ein korrespondierendes Datenausgangssignal (DOUT_M, DOUT_S) ausgibt, **dadurch gekennzeichnet, dass** die Schaltungsanordnung (15)
a) wenigstens eine Manipulationseinheit (110, 120) umfasst, der ein Dateneingangssignal (DIN_S, DIN_M) und ein Ersatzdatensignal (DE_S, DE_M) zugeführt ist und die ein korrespondierendes Datenausgangssignal (DOUT_M, DOUT_S) ausgibt,
b) sowie eine Protokolleinheit (100), der wenigstens ein protokollrelevantes Schnittstellensignal (DIN_S, DIN_M, TCLK_S) zugeführt ist und die anhand von Manipulationsregeln und mit dem wenigstens einen protokollrelevanten Schnittstellensignal (DIN_S, DIN_M, TCLK_S) empfangenen Informationen auswählt, wann die wenigstens eine Manipulationseinheit (110, 120) als Datenausgangssignal (DOUT_M, DOUT_S) das korrespondierende Dateneingangssignal (DIN_S, DIN_M) oder das Ersatzdatensignal (DE_S, DE_M) ausgibt und
c) wobei das Ersatzdatensignal (DE_S, DE_M) von der Protokolleinheit (100) anhand der Manipulationsregeln erzeugt wird.

2. Vorrichtung nach Anspruch 1, **dadurch gekennzeichnet, dass** die Vorrichtung (10) weiter eine Bedienschnittstelle (16) umfasst, an die eine Bedieneinheit (40) anschließbar ist und über die die Schaltungsanordnung (15) programmierbar und/oder bedienbar ist.

3. Vorrichtung nach einem der vorhergehenden Ansprüche, **dadurch gekennzeichnet, dass** in der Schaltungsanordnung (15) weiter ein Manipulationsspeicher (130) vorgesehen ist, in dem Manipulationsregeln speicherbar sind.

4. Vorrichtung nach Anspruch 3, **dadurch gekennzeichnet, dass** der Manipulationsspeicher (130) über die Bedienschnittstelle (16) beschreibbar ist.

5. Vorrichtung nach einem der vorhergehenden Ansprüche, **dadurch gekennzeichnet, dass** an der Vorrichtung (10) Bedienelemente (50) vorgesehen sind, mit denen die Vorrichtung bedienbar ist.

6. Vorrichtung nach einem der vorhergehenden Ansprüche, **dadurch gekennzeichnet, dass** an der Vorrichtung weiter eine Anzeigeeinheit (60) vorgesehen ist.

7. Steuergerät aufweisend wenigstens einen Schnittstellencontroller (24) und eine Vorrichtung (10) nach einem der Ansprüche 1 bis 4, **dadurch gekennzeichnet, dass** eine Master-Schnittstelle (22) des Schnittstellencontrollers (24) mit der Slave-Schnittstelle (12) der Vorrichtung (10) verbunden ist.

## Claims

1. Apparatus for manipulating interface signals, having
• a slave interface (12) which can be connected to a master interface (22) of a control device (20),
• a master interface (18) which can be connected to a slave interface (32) of a measuring device (30),
• a circuit arrangement (15) which is supplied with at least one data input signal (DIN_S, DIN_M) for each interface (12, 18) and outputs a corresponding data output signal (DOUT_M, DOUT_S) for each data input signal (DIN_S, DIN_M) to the respective other interface (12, 18), **characterized in that**
the circuit arrangement (15)
a) comprises at least one manipulation unit (110, 120), which is supplied with a data input signal (DIN_S, DIN_M) and a substitute data signal (DE_S, DE_M) and outputs a corresponding data output signal (DOUT_M, DOUT_S),
b) and a protocol unit (100) which is supplied with at least one protocol-relevant interface signal (DIN_S, DIN_M, TCLK_S) and uses manipulation rules and information received with the at least one protocol-relevant interface signal (DIN_S, DIN_M, TCLK_S) to select when the at least one manipulation unit (110, 120) outputs the corresponding data input signal (DIN_S, DIN_M) or the substitute data signal (DE_S, DE_M) as the data output signal (DOUT_M, DOUT_S), and
c) wherein the substitute data signal (DE_S, DE_M) is generated by the protocol unit (100) using the manipulation rules.

2. Apparatus according to Claim 1, **characterized in that** the apparatus (10) also comprises an operating interface (16), to which an operating unit (40) can be connected and which can be used to program and/or operate the circuit arrangement (15).

3. Apparatus according to one of the preceding claims, **characterized in that** the circuit arrangement (15) also contains a manipulation memory (130) which can store manipulation rules.

4. Apparatus according to Claim 3, **characterized in that** the manipulation memory (1.30) can be written to via the operating interface (16).

5. Apparatus according to one of the preceding claims, **characterized in that** operating elements (50) which can be used to operate the apparatus are provided on the apparatus (10).

6. Apparatus according to one of the preceding claims, **characterized in that** a display unit (60) is also provided on the apparatus.

7. Control device having at least one interface controller (24) and an apparatus (10) according to one of Claims 1 to 4, **characterized in that** a master interface (22) of the interface controller (24) is connected to the slave interface (12) of the apparatus (10).

## Revendications

1. Dispositif destiné à manipuler des signaux d'interface, comprenant
- une interface esclave (12), qui peut être connectée à une interface maîtresse (22) d'un appareil de commande (20),
- une interface maîtresse (18), qui peut être connectée à une interface esclave (32) d'un appareil de mesure (30),
- un système de commutation (15) qui fournit au moins un signal d'entrée de données (DIN_S, DIN_M) à chaque interface (12, 18) et qui délivre un signal de sortie de données correspondant (DOUT_M, DOUT_S) pour chaque signal d'entrée de données (DIN_S, DIN_M) sur d'autres interfaces respectives (12, 18), **caractérisé en ce que** le système de commutation (15)
a) comprend au moins une unité de manipulation (110, 120) à laquelle est fourni un signal d'entrée de données (DIN_S, DIN_M) et un signal de données de remplacement (DE_S, DE_M) et qui délivre un signal de sortie de données correspondant (DOUT_M, DOUT_S),
b) ainsi qu'une unité de protocole (100) à laquelle est fourni au moins un signal d'interface (DIN_S, DIN_M, TCLK_S) relatif au protocole et qui sélectionne des informations reçues conformément à des règles de manipulation et avec l'au moins un signal d'interface (DIN_S, DIN_M, TCLK_S) relatif au protocole, lorsque l'au moins une unité de manipulation (110, 120) délivre en tant que signal de sortie de données (DOUT_M, DOUT_S) le signal d'entrée de données correspondant (DIN_S, DIN_M) ou le signal de données de remplacement (DE_S, DE_M), et
c) dans lequel le signal de données de remplacement (DE_S, DE_M) est généré par l'unité de protocole (100) sur la base des règles de manipulation.

2. Dispositif selon la revendication 1, **caractérisé en ce que** le dispositif (10) comprend en outre une interface utilisateur (16) à laquelle peut être connectée une unité de commande (40) et par l'intermédiaire de laquelle le système de commutation (15) peut être programmé et/ou commandé.

3. Dispositif selon l'une quelconque des revendications précédentes, **caractérisé en ce qu'**il est en outre prévu dans le système de commutation (15) une mémoire de manipulation (130) dans laquelle peuvent être stockées des règles de manipulation.

4. Dispositif selon la revendication 3, **caractérisé en ce que** la mémoire de manipulation (130) peut faire l'objet d'une écriture par l'intermédiaire de l'interface utilisateur (16).

5. Dispositif selon l'une quelconque des revendications précédentes, **caractérisé en ce qu'**il est prévu sur le dispositif (10) des éléments de commande (50) au moyen desquels le dispositif peut être commandé.

6. Dispositif selon l'une quelconque des revendications précédentes, **caractérisé en ce qu'**il est en outre prévu sur le dispositif une unité d'affichage (60).

7. Appareil de commande comportant au moins un contrôleur d'interface (24) et un dispositif (10) selon l'une quelconque des revendications 1 à 4, **caractérisé en ce qu'**une interface maîtresse (22) du contrôleur d'interface (24) est connectée à l'interface esclave (12) du dispositif (10).
